**Europäisches Patentamt**

**European Patent Office**

**Office européen des brevets**

(19)

(11) Veröffentlichungsnummer: **0 103 814**
**B1**

(12) # EUROPÄISCHE PATENTSCHRIFT

(45) Veröffentlichungstag der Patentschrift:
**15.10.86**

(21) Anmeldenummer: **83108820.8**

(22) Anmeldetag: **07.09.83**

(51) Int. Cl.⁴: **C 04 B 7/44,** C 04 B 7/38,
F 27 B 9/00, B 28 B 3/08 //
C04B7/02

(54) **Verfahren zum Herstellen von Zementklinker.**

(30) Priorität: **17.09.82 AT 3477/82**

(43) Veröffentlichungstag der Anmeldung:
**28.03.84 Patentblatt 84/13**

(45) Bekanntmachung des Hinweises auf die Patenterteilung:
**15.10.86 Patentblatt 86/42**

(84) Benannte Vertragsstaaten:
**AT BE DE GB IT**

(56) Entgegenhaltungen:
**AT-B-277 041**
**CH-A-341 751**
**DE-A-2 643 406**
**DE-B-2 405 413**
**DE-C-81 232**
**DE-C-160 550**
**DE-C-248 771**
**DE-C-289 582**

(73) Patentinhaber: **Maerz Ofenbau AG, Richard-Wagner- Str. 28, CH- 8002 Zürich (CH)**

(72) Erfinder: **Füssl, Erwin, Scheideggstrasse 89, CH-8038 Zürich (CH)**

(74) Vertreter: **Meyer, Reinhard, Dipl.- Ing., c/o Dr. A. R. Egli & Co. Patentanwälte Horneggstrasse 4, CH- 8008 Zürich (CH)**

## Beschreibung

Die Erfindung betrifft ein Verfahren zum Herstellen von Zementklinker, bei dem ein aus gebrochenen und gemahlenen Rohgesteinen zusammengesetztes Zementrohmehl in einem Ofen gebrannt wird.

Die CH-A-341 751 beschreibt eine Presse, mit welcher allgemein Briketts ohne einen Binder aus feinverteilten Materialien hergestellt werden können. Dabei wird eine Menge von Partikeln unter einen entsprechenden Druck gesetzt, um eine kompakte Masse zu bilden. Danach wird, solange die Masse noch unter Druck steht, die ganze Masse oder eine Aussenfläche derselben einer wesentlichen Aenderung in Gestalt oder Struktur unterworfen, um innerhalb dieser Masse winklige Scherbelastung von solcher Grösse und Verteilung hervorzurufen, dass ein Brikett von grosser Festigkeit hergestellt wird. Diese Presse ist jedoch nicht ohne weiteres auch bei einem Verfahren zum Herstellen von Zementklinker anwendbar, da es sich hier um ein ganz spezifisches Ausgangsprodukt handelt, welches zudem gebrannt werden muss.

Bei der Zementherstellung stellt das Klinkerbrennen bei Temperaturen von über 1400° C den wichtigsten Prozessschritt dar. Aus den Rohstoffen Kalk und Ton entsteht dabei ein synthetisches Produkt aus überwiegend Kalziumsilikatverbindungen, ferner Kalziumaluminat- und Kalziumaluminatferritverbindungen. Dieses wird fein gemahlen und hat die Eigenschaft, mit Wasser abzubinden und unter Wasser beständig zu bleiben. Kernstück der Zementherstellung ist somit der Ofenbetrieb.

Die ersten Zemente wurden in Schachtöfen gebrannt, wobei es sich hierbei mehr um hochhydraulische Kalke als um Zemente im heutigen Sinne handelte. Es wurden ähnliche Oefen wie auch zum Brennen von Kalk eingesetzt, die chargenweise betrieben wurden, wobei der Brennstoff und das Brenngut lagenweise eingebracht wurden. Es wurde ein Naturstein eingesetzt, dessen Bestandteile an Kalk und Ton der gewünschten Zusammensetzung entsprachen. Dieses Gesteinspaket besass im Schacht eine gute Gasdurchlässigkeit, und damit ergaben sich hohe Leistungen und ein störungsfreier Betrieb. Da jedoch derartige Gesteinsvorkommen an selbstgängigen Rohstoffen begrenzt waren, musste auf die Herstellung künstlicher Zementrohmischungen aus fein gemahlenem Kalkgestein und Ton übergegangen werden, wobei jedoch der Aufwand für die Homogenisierung des Rohmehls und das Stückigmachen desselben als Vorbereitung zum Brennen sehr beträchtlich war. Man übernahm hierbei bekannte Technologien, insbesondere aus dem Bereich der Ziegelherstellung.

So beschreibt die AT-B-277 041 ein Verfahren zur Herstellung hydraulischer Bindemittel, wie Zement u.dgl., aus brikettiertem Rohmehl, in welchem die Kalziumkomponente hauptsächlich aus gebranntem Kalk besteht. Bei der nachfolgenden Wärmebehandlung entfällt eine Gasfreisetzung, die an die Formbeständigkeit des Formlings grösste Anforderungen stellen würde.

Einen Fortschritt bedeutete das Stückigmachen von Zementrohmehl mit Hilfe von Wasser auf einem Granulierteller, wobei der Feuchtigkeitsgehalt der Granalien im Mittel 12 bis 14 Gew.% betrug. Die ursprünglich diskontinuierlich betriebenen Oefen wurden durch kontinuierlich betriebene Schachtöfen abgelöst. Für den Betrieb des Schachtofens sind feste, gasarme Brennstoffe erforderlich. Bevorzugt eingesetzt werden Koks, Anthrazit oder auch Pechkohle, wobei der feste Brennstoff getrennt in den Granalien aufgegeben wird.

Beim Brennen im Schachtofen treten insofern materialbedingte Besonderheiten auf, als die Granalien im Temperaturbereich oberhalb 1280° C schwinden und untereinander zusammensintern. Dadurch entsteht ein fester Klinkerblock, der sich oft von der Ofenwand absetzt; es entstehen dadurch Durchzüge für die Rauchgase, die die Ursache für einen ungleichmässigen Brand sind.

Die Tagesleistung eines modernen Zementschachtofens beträgt ca. 200 t bei einem Ofendurchmesser von 3 m und einer Schachthöhe von ca. 10 m. Der Wärmeverbrauch im Schachtofen ist als günstig zu bezeichnen, er liegt bei etwa 800 kcal/kg Klinker.

Als Vorteile weist der Schachtofen geringe Investitionskosten und eine einfache Bedienung bei hoher Verfügbarkeit auf. Nachteilig ist jedoch, dass ein gleichmässiger Klinkerbrand nicht gewährleistet ist. Für hochwertige Produkte, z.B. für Spannbeton oder in Betonwarenfabriken, wo es auf exakte Ausschalzeiten ankommt, kann Schachtofenklinker nicht eingesetzt werden. Zudem werden zum Brennen gasarme, feste Brennstoffe benötigt; eine Beteuerung mit flüssigen oder gasförmigen Brennstoffen ist bislang nicht gelungen.

Aus der DE-B2-2 405 413 ist ein Verfahren zum Brennen, Sintern oder Fritten von Zementklinkern od.dgl. aus einer mit Wasser angemachten Rohstoffmischung in einem Tunnelofen zu entnehmen, bei welchem die Rohstoffmischung als lockeres Stranghaufwerk auf die Tunnelofenwagen gelegt und durch den Tunnelofen geführt wird. Voraussetzung für die Durchführung dieses Verfahrens ist, dass die Rohstoffmischung durch Wasserzusatz plastifiziert wird. Das Plastifizieren erfordert aber in Anbetracht der Feinheit des Rohmehls einen Wasserzusatz von wenigstens 25 %. Dieses Wasser muss dann im Ofen wieder ausgetrieben werden. Für die Herstellung von 1 kg Zement werden etwa 1,5 kg trockenes Rohmehl benötigt. Bei einem entsprechenden Wassergehalt ist mit einem zusätzlichen Energieverbrauch von mindestens 350 kcal/kg Zement zu rechnen. Dies sind 40 % mehr Energie als normalerweise erforderlich, so dass die Mehrkosten das Verfahren unwirtschaftlich machen.

Ein anderes Brennaggregat für die Herstellung von Portlandzement ist der Ringofen, der zunächst für die Herstellung von Ziegelsteinen, dann aber auch für die Portlandzementherstellung eingesetzt wurde. Dieser arbeitet kontinuierlich mit wandernder Brennzone und feststehender Brenngutcharge, wobei Zementformlinge wie Ziegel eingebracht wurden. Im Ofenumfang sind in regelmässigem Abstand Türen zum Chargieren und Entleeren der einzelnen Ofenabschnitte angeordnet, die während des Brennens zugemauert sind. Die Zementformlinge wurden in dem Ofen so hoch erhitzt, dass sie nach dem Brand als gebrannte Backsteine dem Ofen entnommen werden können. Zum Verdichten der Rohlinge wurden vorzugsweise Schlagstempelpressen mit zwei Formen eingesetzt.

Zum Brennen von Zement sind die Ringöfen, vor allem wegen des hohen Arbeitsaufwandes für das Chargieren und Entleeren des Ofens bei unangenehmen Arbeitsbedingungen und wegen der hohen Temperaturwechselbeanspruchung des Mauerwerks, durch die Drehrohröfen abgelöst worden, die das wichtigste Brennaggregat in der Zementindustrie geworden sind und heute fast ausschliesslich angewendet werden.

Zunächst wurde das Brenngut als Schlamm aufgegeben, wobei ein Stückigmachen des Brenngutes vor dem Einsatz in den Ofen nicht mehr erforderlich war. Später wurde das Rohmehl als trockenes Pulver, für den Drehofen aufgegeben. Beim Brennen von trochenem Rohmaterial wurden zunächst sehr lange Drehrohröfen verwendet.

Bei der weiteren Entwicklung wurde der Drehrohrofen mit einem Zyklonvorwärmer, auch Schwebegaswärmetauscher genannt, versehen, wobei auch hier das Rohmehl ohne Anfeuchten als Pulver dem Ofensystem aufgegeben wird. Das Rohmehl wird in meist vier Temperatursprüngen innerhalb von 25 Sek. auf ca. 750°C bis 800°C erwärmt und wird bis auf etwa 20% entsäuert.

Lag beim Nassdrehrohrofen der Wärmeverbrauch bei ca. 1500 kcal/kg Klinker, sank er beim Trockendrehrohrofen auf ca. 1200 kcal/kg Klinker und liegt beim Ofen mit Schwebegaswärmetauscher bei etwa 770 kcal/kg Klinker, wobei dieser Wert bei kleineren Anlagen etwas höher und bei Grossanlagen etwas niedriger ist.

Die Vorteile des Drehrohrofens mit Wärmetauscher liegen in seinem geringen Wärmeverbrauch, einem schnellen, fast idealen Wärmeübergang vom Rauchgas auf das Brenngut im Temperaturbereich bis 800°C, im Einsatz von festen, flüssigen und gasförmigen Brennstoffen, seiner hohen Produktionsleistung und hohen Verfügbarkeit.

Der wesentliche Nachteil des Drehrohrofens besteht darin, dass eine kostengünstige Produktion nur noch mit Grossanlagen möglich ist.

Weitere Brennaggregate für die Zementherstellung, z.B. das Sinterband und der Wirbelschichtofen, konnten sich jedoch wegen anhaftender Mängel, vor allem im verfahrenstechnischen Bereich, nicht durchsetzen.

Aufgrund der hohen Zementnachfrage in Industrieländern und der sehr hohen Zementverbrauchsdichte in diesen Ländern wird heute fast nur noch der Trockendrehrohrofen eingesetzt, wobei die Variationen sich lediglich auf die Art der Vorerwärmung - Zyklonvorwärmer mit oder ohne Zusatzbeheizung - und die Art der Klinkerkühlung - Planetenkühler, Rostkühler, Schachtkühler - beschränken. Hierbei wurde mit grosser Konsequenz eine Kostensenkung durch Erhöhung der Ofenleistung herbeigeführt. Letztere wurde von 300 t Tagesleistung im Jahre 1950 auf eine Tagesleistung von 5000 t bis 6000 t im Jahre 1980 gesteigert. Während bei einer Tagesproduktion von 500 t ein spezifischer Wärmeverbrauch von 870 Kcal/kg Klinker benötigt wird, ist dieser bei einer Anlage von 3000 t Tagesleitung 760 kcal/kg Klinker. Eine ähnliche Abnahme ergibt sich auch bei den Lohnstückkosten und bei den auf die Jahreskapazität bezogenen Gesamtinvestitionskosten (spezifische Investitionskosten). Diese Zahlen zeigen eindrücklich, dass eine Grossanlage enorme Produktionskostenvorteile bietet, die jedoch nur gewahrt werden können, wenn durch eine entsprechende Nachfrage die Anlage gleichmässig über das gesamte Jahr ausgelastet wird und der Markt eine entsprechend hohe Zementverbrauchsdichte mit entsprechend kurzen Transportwegen aufweist, denn die Preisfestsetzung erfolgt unter Einrechnung der Transportkosten.

Nun ist jedoch die Zementverbrauchsdichte in vielen Ländern der Welt wesentlich kleiner als in den Industrieländern, und zwar bis zu zwei Zehnerpotenzen. Das bedeutet, dass bei sonst gleichen Verhältnissen der Zement in diesen Ländern über einen wesentlich grösseren Transportradius abtransportiert werden muss. Beispielsweise beträgt der mittlere Absatzradius für eine Grossanlage von 3000 t in einem Industrieland wie der BRD etwa 40 km, in einem Entwicklungsland dagegen etwa 200 km. Dieser Unterschied zeigt deutlich, dass Grossanlagen für Länder mit geringer Zementverbrauchsdichte nicht geeignet sind.

Hier setzt die Erfindung ein, der die Aufgabe zugrundeliegt, ein Verfahren zur Herstellung von Portlandzementklinker so auszugestalten, dass damit wettbewerbsfähige Kleinanlagen gebaut werden können.

Diese Aufgabe wird gemäss der Erfindung dadurch gelöst, dass das Zementrohmehl ohne Bindemittelzusatz trocken mit spezifischen Pressdrücken von mindestens 20 MPa (200 und mehr bar) zu Formlingen mit einer Rohdichte von mindestens 1,8 kg/dm$^3$ gepresst wird und diese anschliessend in einem Tunnelofen gebrannt werden, wobei die Formlinge lagenweise und mit Abstand angeordnet werden.

Die Erfindung geht von der Ueberlegung aus, dass das Gesetz der Kostensenkung mit steigender Anlagengrösse durchbrochen werden kann, wobei zu berücksichtigen ist, dass die Ueberlegenheit von Grossanlagen bei der industriellen Produktion vornehmlich auf Stückkostenüberlegungen basiert. Stellen jedoch die Transportkosten einen wesentlichen erlösmindernden Faktor dar, können sich Kleinanlagen besonders dann durchsetzen, wenn durch eine andersartige Technologie die Anlagengrösse dem Marktpotential angepasst werden kann, wodurch sich günstigere Erstellungskosten auch bei Kleinanlagen ergeben. Diese andere Technologie ist durch das erfingungsgemässe Verfahren definiert, das auch für die Herstellung von Spezialzementen, z.B. Weisszementen, geeignet ist, die in wesentlich kleineren Mengen als Normalportlandzement benötigt werden.

Nach den neueren Erkenntnissen über das Klinkerbrennen läuft die Mineralbildung im Brenngut in Abhängigkeit von der Brenntemperatur so ab, dass bereits ab 600°C das Kalziumkarbonat mit $SiO_2$ zu $C_2S$ (2CaO.$SiO_2$) und die Aluminatkomponente aus dem Ton mit dem Kalziumkarbonat zu Kalziumaluminat- und Ferrit-Verbindungen unter Abgabe von $CO_2$ reagieren.

In einem Drehrohrofen mit Zyklonvorwärmer kann dieser Effekt nicht ausgenützt werden, da die Reaktionspartner in der Gas/Feststoff-Suspension keinen Kontakt untereinander haben. Bei Drehrohröfen mit Zusatzbeheizung im Zyklon sind die Reaktionsteilchen sogar bis in den Temperaturbereich von 850°C bis 900°C isoliert. Eine Reaktionsumsetzung findet erst nach der Agglomeration im Drehrohrofen und da bei höheren Temperaturen statt.

Dagegen können beim Brennen von Briketts in einem Tunnelofen die oben beschriebenen Reaktionen tatsächlich ablaufen. Hierbei geben die dabei entstehenden Neubildungen dem Brikett eine keramische Bindung. Freies CaO entsteht im Brikett erst bei einer Temperatur oberhalb von 900°C, wenn die Geschwindigkeit der Kalksteindissoziation grösser ist als die Kalkbindungsreaktionen. Die frühe $C_2S$-Bildung und die Vielzahl der $C_2S$-Kristalle, die dabei entstehen, wirken sich positiv auf den Sintervorgang und die Qualität des Fertigprodukts aus. Voraussetzung ist allerdings, dass das Rohmehl genauso fein gemahlen wird wie für den Drehrohrofenbetrieb. Das Brennen im Tunnelofen bietet somit Vorteile gegenüber dem Drehrohrofenbetrieb.

Ab 1280°C bildet sich die erste Schmelzphase, die mit einer starken Schrumpfung des Briketts verbunden ist. Bei einer normalen Portlandzementrohmischung beträgt im Mittel der Anteil der Schmelzphase 20%, lediglich bei $Fe_2O_3$- und $Al_2O_3$-reichhaltigen Rohstoffmischungen kann der Schmelzanteil auf maximal 30% anwachsen. Die Schmelze ist zähflüssig, so dass keine Probleme hinsichtlich der Standfestigkeit der Briketts in der Sinterzone entstehen. Ab 1280°C bis 1450°C bildet sich $C_3S$ (3CaO.$SiO_2$)über die Schmelzphase aus $C_2S$ und CaO. Im Hinblick auf die vorstehend beschriebenen Vorgänge kann demnach die Sintertemperatur im Tunnelofen niedriger eingestellt werden als im Drehrohrofen. Das Kühlen von 1450°C auf 1250°C kann auch im Tunnelofen mit der wünschenswerten Schnelligkeit (Sturzkühlung), d.h. innerhalb von etwa 30 Min., erfolgen, um einen Zement mit hohen Festigkeitswerten und normalem Erstarrungsverhalten zu erzeugen. Ebenso kann die Kühlung im Tunnelofen von 1200°C auf ca. 200°C zur Verbesserung der Mahlbarkeit des Klinkers langsam erfolgen.

Zweckmässig wird das Zementrohmehl ohne Bindemittelzusatz trocken brikettiert, d.h. zu Formlingen gepresst, und gebrannt, wobei auch feste Brennstoffe beigemischt werden können. Der Feuchtegehalt beim Pressen beträgt zweckmässig 0 - 5%, siehe Ullmanns Enzyclopädie 4. Aufl. 1977, Bd 13, S. 719 betr. Verdichtung von Pulvern.

Die Brikettierung, d.h. die Trockenverdichtung des Zementrohmehls kann zweckmässig zweistufig erfolgen.

Dies kann entweder auf einer einzigen Pressvorrichtung ausgeführt werden, indem das Zementrohmehl zunächst vorverdichtet, der Pressdruck zur Entlüftung des vorverdichteten Presslings reduziert wird und der Pressling dann anschliessend endverdichtet wird, oder das Zementrohmehl wird in der ersten Verdichtungsstufe auf einer besonderen Maschine, z.B. Eierbrikettpresse, vorverdichtet und die Eierbriketts danach in einer zweiten Stufe auf einer Presse in die endgültige quaderförmige Steinform mit bestimmten Abmessungen gebracht.

Für die Vorverdichtung können auch Maschinen eingesetzt werden, die sog. Schülpen erzeugen. Es handelt sich dabei um keine einheitlich gleichförmigen Presslinge, sondern um brettförmige bis etwa 10 mm dicke Platten, die auf eine gewünschte Grösse gebrochen und gesiebt werden müssen.

Die Vorverdichtung dient dazu, die Luft aus dem Pulvergemisch zu entfernen, wodurch fehlerfreie, d.h. texturfreie, Presslinge erzielt werden.

Für die Endverdichtung sind spezifische Pressdrücke von mindestens 20 MPa (200 kp/cm²) anzuwenden.

Beim Brennen kann der Tunnelofen zweckmässig beim Aufheizen und Sintern im Gegenstrom, beim Kühlen dagegen, insbesondere im Temperaturbereich von 1450°C bis 1250°C, wahlweise im Gegen- oder Querstrom betrieben werden.

**Beispiel**

Ofen für eine Klinkerproduktion von 260 t/Tag. Gewählt wird ein Rohmehlformling mit einem Format von 240 x 115 x 115 mm. Dies gibt ein Volumen von 3,17 l und ein Gewicht von 5,7 kg Rohmehl (Dichte = 1,8 kg/dm³ = 3,75 kg gebrannter Klinker).

Der gewählte Tunnelofen weist eine Breite von 4,0 m und eine Höhe von 1,31 m auf. Bei 70% Raumausnützung ergibt dies 220 Steine/m³.

Für die Auslegung des Tunnelofens wird ein Temperaturgradient von 120 K/h zugrundegelegt. Mit den Zeitabschnitten

Aufheizen auf Zersetzungstemperatur des Kalksteins 8 Std.

Entsäuerungszeit 8 Std.

Sinterung 2 Std.

Kühlung 6 Std.

ergibt dies eine Durchlaufzeit von 24 Std.

Im Hinblick auf die im Tunnelofen zu erwartenden Temperaturunterschiede wird diese Zeit verdoppelt, so dass die Durchlaufzeit durch den Tunnelofen 48 Std. beträgt. Die Länge eines Tunnelofenwagens ist 2,50 m und die Vorschubgeschwindigkeit 2,5 m/Std. Mit einem Ofenquerschnitt von 5,24 m² können pro Meter 1153 Formlinge, entsprechend einer Menge von 4225 kg Klinker/m untergebracht werden. Mit der Vorschubgeschwindigkeit von 2,5 m/h beträgt die Klinkerproduktion 10,8 t/Std. oder 260 t/Tag. Die Länge des Tunnelofens ist rund 115 m (120 m).

Die Formlinge werden ohne Bindemittelzusatz auf einer, z.B. zweiseitig wirkenden Hydraulikpresse mit Pressdrücken von mindestens 20 MPa (200 und mehr bar) und mit einer Arbeitsgeschwindigkeit von 400 Takten/Std. hergestellt. Je Takt werden in zwei Reihen jeweils sechs Steine des Formates 240 x 115 x 115 mm mit einer Rohdichte vom mindestens 1,8 kg/dm³ gepresst, so dass sich die Gesamtleistung auf 4800 Steine beläuft, das sind 27,7 t Rohmehl/Std. oder 18 t Klinker/Std. Bei 21 Stunden täglicher Betriebszeit ergibt dies eine Leistung von 378 t Klinker. Eine Vergrösserung des Steinformats auf 300 mm Länge würde eine Leistung von sogar 475 t Klinker/24 Std. ergeben, was einer Tagesleistung von 500 t Zement entspricht.

Mit einer solchen Anlage ergeben die etwas höheren spezifischen Investitionskosten und die Personalkosten nur geringfügig höhere Produktionskosten als mit einer Grossanlage, doch ergibt sich gegenüber dieser in Gebieten mit geringerer Zementverbrauchsdichte ein spürbarer Kostenvorsprung.

**Patentansprüche**

1. Verfahren zum Herstellen von Zementklinker, bei dem ein aus gebrochenen und gemahlenen Rohgesteinen zusammengesetztes Zementrohmehl in einem Ofen gebrannt wird, dadurch gekennzeichnet, dass das Zementrohmehl ohne Bindemittelzusatz trocken mit spezifischen Pressdrücken von mindestens 20 MPa (200 und mehr bar) zu Formlingen mit einer Rohdichte von mindestens 1,8 kg/dm³ gepresst wird und diese anschliessend in einem Tunnelofen gebrannt werden, wobei die Formlinge lagenweise und mit Abstand angeordnet werden.

2. Verfahren nach Anspruch 1, dadurch gekennzeichnet, dass dem Zementrohmehl vor dem Pressen der Formlinge feste Brennstoffe beigemischt werden.

3. Verfahren nach Anspruch 1 oder 2, dadurch gekennzeichnet, dass das Zementrohmehl auf zweiseitig wirkenden Pressen zu Formlingen gepresst wird.

4. Verfahren nach Anspruch 1, dadurch gekennzeichnet, dass der Tunnelofen beim Aufheizen und Sintern im Gegenstrom, beim Kühlen, insbesondere im Temperaturbereich von 1450 °C bis 1250 °C wahlweise im Querstrom oder im Gegenstrom betrieben wird.

**Claims**

1. Process for producing cement clinkers, by which composed cement pipe powder of broken and milled raw stones is baked in a kiln, characterized in that the cement pope powder without the addition ot a binding agent is pressed dry by means of specific amounts of pressure of 200 and more bar into casting with a gross density of at least 1.8 kg/dm³, which thereafter are baked in a tunnel kiln, and that the castings are arranged in layers with spacings therebetween.

2. Process according to claim 1, characterized in that solid fuel is added to the cement pipe powder before the castings are pressed.

3. Process according to claim 1 or 2, characterized in that the cement pipe powder is pressed into castings on devices acting in two directions.

4. Process according to claim 1, characterized in that the tunnel kiln on heating and sintering with opposed flow, in particular in the temperature range from 1450 to 1250°C, at choice can be operated with cross or opposite flow.

**Revendications**

1. Procédé de préparation de clinker, dans lequel on cuit dans un four une farine crue de ciment composée de roches brutes broyées et moulues, caractérisé en ce que la farine crue de ciment est, sans apport de liant, pressée à sec à des pressions spécifiques d'au moins 20 MPa (200 bars et plus) en agglomérés présentant une densité apparente d'au moins 1,8 kg/dm³ et en ce que ceux-ci sont ensuite cuits dans un four tunnel, les agglomérés étant disposés en couches et à distances.

2. Procédé suivant la revendication 1, caractérisé en ce que, avant le pressage des agglomérés, on mélange à la farine crue de ciment des combustibles solides.

3. Procédé suivant l'une des revendications 1 et 2, caractérisé en ce que la farine crue de ciment est pressée en agglomérés sur des presses agissant des deux côtés.

4. Procédé suivant la revendication 1, caractérisé en ce que le four tunnel est mis en oeuvre à contre-courant au cours du chauffage et du frittage, et sélectivement en courant transversal ou à contre-courant au cours du refroidissement, en particulier dans la gamme thermique de 1450° C à 1250° C.